(19) Europäisches Patentamt / European Patent Office / Office européen des brevets

(11) **EP 3 260 276 B1**

(12) **EUROPÄISCHE PATENTSCHRIFT**

(45) Veröffentlichungstag und Bekanntmachung des Hinweises auf die Patenterteilung:
**06.10.2021   Patentblatt 2021/40**

(51) Int Cl.:
**B29C 64/393** (2017.01)     **B29C 64/153** (2017.01)

(21) Anmeldenummer: **17175753.7**

(22) Anmeldetag: **13.06.2017**

(54) **AUTOMATISCHE JUSTIERUNG EINER HEIZUNGSREGELUNG IN EINER GENERATIVEN SCHICHTBAUVORRICHTUNG**

AUTOMATIC ADJUSTMENT OF A HEATING CONTROL DEVICE IN A GENERATIVE LAYER-BASED CONSTRUCTION DEVICE

AJUSTEMENT AUTOMATIQUE D'UN RÉGLAGE DE CHAUFFAGE DANS UN DISPOSITIF DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016   DE 102016211313**

(43) Veröffentlichungstag der Anmeldung:
**27.12.2017   Patentblatt 2017/52**

(73) Patentinhaber: **EOS GmbH Electro Optical Systems**
**82152 Krailling (DE)**

(72) Erfinder:
• **FRUTH, Albert**
  **82110 Germering (DE)**
• **KELLER, Peter**
  **82152 Krailling (DE)**
• **SCHMIDTNER, Markus**
  **86899 Landsberg am Lech (DE)**

(74) Vertreter: **Prüfer & Partner mbB**
**Patentanwälte · Rechtsanwälte**
**Sohnckestraße 12**
**81479 München (DE)**

(56) Entgegenhaltungen:
WO-A2-2015/108547     DE-A1-102004 029 103
US-A1- 2004 104 499     US-A1- 2011 165 340

**Beschreibung**

Die Erfindung betrifft eine Vorrichtung und ein Verfahren zur Justierung einer Heizungsregelung in einer generativen Schichtbauvorrichtung und eine an das Verfahren angepasste generative Schichtbauvorrichtung bzw. Steuereinheit in derselben.

DE 10 2004 029 103 A1 beschreibt eine Wärmebehandlungseinrichtung und ein Wärmebehandlungsverfahren bei einem Substrat wie etwa einem Maskensubstrat (Retikelsubstrat) oder einem Halbleiterwafer. Während der Temperung des Substrats kommt dabei ein PID-Regler zum Einsatz. Während des Aufheizens werden stufenweise anwachsende Referenzwerte für die Heizleistung eingestellt, welche als Tabelle in einem Speicher hinterlegt sind. Zudem wird die tatsächliche Temperatur des Substrats gemessen und in Abhängigkeit des Unterschieds zu einer Solltemperatur durch einen Kompensationswertgenerator ein Kompensationswert erzeugt, mit dem der jeweilige Referenzwert multipliziert wird.

In der europäischen Patentschrift EP 0 764 079 B1 wird eine Lasersintervorrichtung beschrieben, bei der eine Auftragsvorrichtung Schichten des Aufbaumaterials auf einen Träger oder eine zuvor bereits selektiv verfestigte Schicht aufträgt, wonach die dem jeweiligen Objektquerschnitt entsprechenden Stellen des Aufbaumaterials in der Schicht durch eine Verfestigungseinrichtung verfestigt werden. Vor der Verfestigung wird das aufgetragene Pulver mittels einer Heizeinrichtung vorerwärmt. Ziel der Erfindung in EP 0 764 079 B1 ist dabei eine möglichst gleichmäßige Temperatur des Aufbaumaterials in einer Schicht vor der Verfestigung, um gleiche Verfestigungsbedingungen innerhalb der Schicht zu gewährleisten.

EP 0 764 079 B1 führt aus, dass gerade nach dem Auftrag einer neuen (kalten) Pulverschicht es eine bestimmte Zeit dauert, bis die gesamte Pulverschicht durch Wärmetransport auf die gewünschte Temperatur gebracht ist, da die von der Heizeinrichtung abgegebene Strahlungswärme die Pulverschicht nur an der Oberfläche erwärmt. Um diesen Umstand zu berücksichtigen, ist eine Regelung der Heizleistung vorgesehen. Da die für die Erwärmung des neu aufgebrachten Pulvers notwendige Zeit nicht zum Baufortschritt beiträgt, soll mit der Regelung die Zeit für die Erwärmung des Pulvers möglichst kurz gehalten werden. Insbesondere bei Schichten, in denen nur ein geringer Bruchteil der Fläche verfestigt werden soll, ist dies von Bedeutung, da in diesen Schichten die Verfestigung nur einen kurzen Zeitraum in Anspruch nimmt. Zur möglichst genauen Bestimmung der geeigneten Regelparameter schlägt EP 0 764 079 B1 vor, das Wärmeübertragungsverhalten des Aufbaumaterials zu ermitteln.

Aus der US 2011/0165340 A1 ist ein Regelkreis für eine Heizungsregelung bekannt, die einen Heizstrahler über einen PID- oder PI-Regler mittels zuvor bestimmter Regelparameterwerte ansteuert.

Die Erfinder der vorliegenden Anmeldung haben erkannt, dass das Verhalten der Heizungsregelung nicht nur vom verwendeten Pulvermaterial abhängt. Vielmehr wird es auch durch die verwendete generative Schichtbauvorrichtung (beispielsweise deren Wärmeableitvermögen in den unterschiedlichen Bereichen des Baufelds) beeinflusst. Insbesondere treten sogar für ein und denselben Vorrichtungstyp Unterschiede zwischen den individuellen Vorrichtungen auf.

Die Aufgabe der vorliegenden Erfindung ist es deshalb, eine Heizungsregelung in einer generativen Schichtbauvorrichtung zu verbessern.

Die Aufgabe wird gelöst durch eine generative Schichtbauvorrichtung mit einer Vorrichtung zur Justierung einer Heizungsregelung nach Anspruch 1, ein Verfahren zur Justierung einer Heizungsregelung in einer generativen Schichtbauvorrichtung nach Anspruch 7, eine Steuereinheit nach Anspruch 10, eine generative Schichtbauvorrichtung nach Anspruch 11 und ein Computerprogramm nach Anspruch 12. Weiterbildungen der Erfindung sind in den Unteransprüchen angegeben. Dabei können Merkmale, die in den Unteransprüchen bzw. in der folgenden Beschreibung im Zusammenhang mit einer Anspruchskategorie erwähnt werden, auch zur Weiterbildung der Gegenstände jeder anderen Anspruchskategorie verwendet werden, es sei denn, dies wird explizit ausgeschlossen.

Eine erfindungsgemäße gGenerative Schichtbauvorrichtung mit einer Vorrichtung zur Justierung einer Heizungsregelung in einer generativen Schichtbauvorrichtung, in der eine Anzahl von Objekten durch schichtweisen Auftrag von Aufbaumaterialschichten, insbesondere Pulverschichten, aufeinander hergestellt werden kann, indem in einer Mehrzahl der Aufbaumaterialschichten die den Querschnitten der Objekte in dieser Aufbaumaterialschicht entsprechenden Stellen mittels Strahlung verfestigt werden, wobei die Heizungsregelung die Aufheizung einer aufgetragenen Aufbaumaterialschicht mittels einer Heizvorrichtung auf eine Arbeitstemperatur $T_A$ regelt und in der Lage ist, auf der Grundlage mindestens eines Regelparameters den Wert mindestens einer vorbestimmten Regelgröße durch Abändern des Werts mindestens einer vorbestimmten Stellgröße zu regeln, weist auf:

eine Sollparameter-Bereitstellungseinheit, die so ausgelegt ist, dass sie mindestens einen Sollparameterwert, also den Sollwert einer Regelgröße und/oder oder dessen Änderung mit der Zeit und/oder den Sollwert eines Heizungsparameters und/oder dessen Änderung mit der Zeit, bereitstellt,
eine Istparameter-Erfassungseinheit, die so ausgelegt ist, dass sie für mindestens einen der Sollparameterwerte den zugehörigen Istparameterwert in der Heizungsregelung oder der generativen Schichtbauvorrichtung erfassen kann, wobei ein Istparameterwert der tatsächliche Wert einer Regelgröße und/oder der tatsächliche Wert von deren Änderung mit der Zeit und/oder der tatsächlichen Wert eines Heizungsparameters und/oder der tatsächliche Wert von dessen Änderung mit der Zeit ist, und

eine Regeländerungseinheit, die bei Überschreiten einer vordefinierten Abweichung zwischen einem Sollparameterwert und seinem zugehörigen Istparameterwert mindestens einen Regelparameterwert automatisch verändert, wobei es sich bei dem mindestens einen veränderten Regelparameter um mindestens eine der folgenden Größen handelt:

die maximal zulässige Heizleistung ($P_{max}$), die Größe des Stellbereichs mindestens einer der Stellgrößen, den Regelbereich (200) um die Arbeitstemperatur ($T_A$) herum, innerhalb dessen die Heizungsregelung tatsächlich regelt, die maximale und/oder minimale Änderung der Heizleistung mit der Zeit, mindestens einen Linearfaktor einer das Verhalten der Regelung beschreibenden Übertragungsfunktion, die P-Verstärkung, die Vorhaltzeit oder die Nachstellzeit eines Proportional-, Integral- oder Differentialanteils der Heizungsregelung.

Bei einem der veränderten Regelparameter handelt es sich um die P-Verstärkung (also den (Proportional-Verstärkungsfaktor), die Nachstellzeit oder die Vorhaltzeit eines Proportional-, Integral- oder Differentialanteils der Heizungsregelung (bei paralleler Reglerstruktur). Hierbei wird davon ausgegangen, dass der Reglerausgang u(t) in folgender Weise vom Reglereingang e(t) abhängt:

$$u(t) = K_P\left[e(t) + \frac{1}{T_N}\int_0^t e(\tau)d\tau + T_V\frac{d}{dt}e(t)\right]$$

wobei Kp die P-Verstärkung bezeichnet, $T_N$ die Nachstellzeit und $T_V$ die Vorhaltzeit.

Gerade wenn sich die Heizungsregelung eines PD-, PI- oder PID-Reglers bedient, kann durch Abändern der entsprechenden Linearfaktoren das grundlegende Verhalten der Regelung auf einfache Weise herbeigeführt werden, z.B. ein asymptotisches Verhalten herbeigeführt werden oder eine Begrenzung der Überschwingweite bewirkt werden.

Mittels der erfindungsgemäßen generativen Schichtbauvorrichtung kann eine Heizungsregelung in einer generativen Schichtbauvorrichtung automatisch in ihrem Regelverhalten abgeändert werden und somit an in einem konkreten Bauvorgang vorliegende Randbedingungen angepasst werden. Dies verbessert die Qualität der in einer generativen Schichtbauvorrichtung hergestellten Objekte und führt darüberhinaus zu einer vereinfachten Bedienbarkeit der generativen Schichtbauvorrichtung. In der vorliegenden Anmeldung soll der Begriff "Anzahl" die Bedeutung von "ein oder mehrere" haben. Bedingt durch den Herstellungsvorgang können in einer generativen Schichtbauvorrichtung parallel (also gleichzeitig) mehrere Objekte hergestellt werden. Es sei noch erwähnt, dass die Istparameter-Erfassungseinheit bevorzugt zu jedem der bereitgestellten Sollparameterwerte den zugehörigen Istparameter ermittelt.

Bevorzugt verwendet die Vorrichtung zur Justierung einer Heizungsregelung als Stellgröße die Heizleistung der zur Aufheizung einer Aufbaumaterialschicht verwendeten Heizvorrichtung. Damit kann am Effektivsten auf die Temperatur der obersten Aufbaumaterialschicht eingewirkt werden und auch bei der Justierung der Heizungsregelung ergeben sich dadurch vielfältige Möglichkeiten.

Bevorzugt handelt es sich bei dem mindestens einen Sollparameter um mindestens eine der folgenden Größen: die Arbeitstemperatur $T_A$, die maximale und/oder minimale Änderung der Temperatur des Aufbaumaterials mit der Zeit, die maximale Zeitdauer für das Aufheizen des Aufbaumaterials auf die Arbeitstemperatur $T_A$ ab dem Beginn des Auftrags einer neuen Aufbaumaterialschicht, die Regelgüte. Im Wesentlichen ist man daran interessiert, wie präzise die Einstellung der Arbeitstemperatur mit der Heizungsregelung funktioniert. Dies lässt sich mit den aufgelisteten Größen besonders gut spezifizieren und kontrollieren.

Vorzugsweise ermittelt die Istparameter-Erfassungseinheit die für die Aufheizung einer neu aufgetragenen Aufbaumaterialschicht auf die Arbeitstemperatur $T_A$ benötigte Zeit und verändert die Regeländerungseinheit bei Überschreiten einer vorgegeben Maximal-Aufheizzeit automatisch mindestens einen Regelparameterwert. Gerade bei einer Serienfertigung von Bauteilen mittels eines generativen Schichtbauverfahrens steht die erforderliche Fertigungszeit im Vordergrund. Da es sich bei der Aufheizzeit im Grunde lediglich um eine unproduktive Wartezeit handelt, sollte diese möglichst kurz sein. Hier kann nun mit dem erfindungsgemäßen Vorgehen gezielt die Fertigungszeit so kurz wie möglich gehalten werden.

Bei einer bevorzugten Variante der erfindungsgemäßen Vorrichtung zur Justierung einer Heizungsregelung bedient sich die Regeländerungseinheit zur Veränderung des mindestens einen Regelparameterwerts einer Fuzzy-Regelung. Da in einer generativen Schichtbauvorrichtung viele Randbedingungen die Temperatur der zu verfestigenden Aufbaumaterialschicht beeinflussen, ist die Heizungsregelung komplex. Hier kann eine Fuzzy-Regelung der Regelparameter gute Ergebnisse liefern, da die die Temperatur beeinflussenden Prozesse nicht bis ins letzte Detail studiert werden müssen.

Bei einer weiteren bevorzugten Variante der erfindungsgemäßen Vorrichtung zur Justierung einer Heizungsregelung bedient sich die Regeländerungseinheit zur Veränderung des mindestens einen Regelparameterwerts eines neuronalen Netzes und/oder eines evolutionären Algorithmus, welche auf von der Istparameter-Erfassungseinheit in der Vergangenheit erfasste Istparameterwerte zurückgreifen. Ähnlich wie bei Verwendung einer Fuzzy-Regelung, ist es nicht erforderlich, alle die Temperatur der zu verfestigenden Aufbaumaterialschicht beeinflussenden Prozesse bis ins letzte Detail zu studieren, indem bei der Justierung der Regelparameter auf Erfahrungswerte aus der Vergangenheit zurückgegriffen wird.

Ein erfindungsgemäßes Verfahren zur Justierung einer Heizungsregelung in einer generativen Schichtbauvorrichtung, in der eine Anzahl von Objekten durch schichtweisen Auftrag von Aufbaumaterialschichten, insbesondere Pulverschichten, aufeinander hergestellt werden kann, indem in einer Mehrzahl der Aufbaumaterialschichten die den Querschnitten der Objekte in dieser Aufbaumaterialschicht entsprechenden Stellen mittels Strahlung verfestigt werden, wobei die Heizungsregelung die Aufheizung einer aufgetragenen Aufbaumaterialschicht mittels einer Heizvorrichtung auf eine Arbeitstemperatur regelt und auf der Grundlage mindestens eines Regelparameters den Wert mindestens einer vorbestimmten Regelgröße durch Abändern des Werts mindestens einer vorbestimmten Stellgröße regelt, umfasst mindestens die folgenden Schritte:

einen Schritt S1 der Bereitstellung mindestens eines Sollparameterwerts, also des Sollwerts einer Regelgröße und/oder des Sollwerts von deren Änderung mit der Zeit und/oder des Sollwerts eines Heizungsparameters und/oder des Sollwerts von dessen Änderung mit der Zeit,
einen Schritt S2 der Erfassung von zumindest einem zu dem mindestens einen Sollparameterwert zugehörigen Istparameterwert in der Heizungsregelung oder der generativen Schichtbauvorrichtung, wobei ein Istparameterwert der tatsächliche Wert einer Regelgröße und/oder der tatsächliche Wert von deren Änderung mit der Zeit und/oder der tatsächliche Wert eines Heizungsparameters und/oder der tatsächliche Wert von dessen Änderung mit der Zeit ist, und
einen Schritt S3 der automatischen Veränderung mindestens eines Regelparameters bei Überschreiten einer vordefinierten Abweichung zwischen einem Sollparameterwert und seinem zugehörigen Istparameterwert.

Das erfindungsgemäße Verfahren erzielt die gleichen Vorteile wie die erfindungsgemäße Vorrichtung. Insbesondere beinhaltet beim Schritt S1 der Begriff "Bereitstellung eines Sollparameterwerts" auch den lediglichen Zugriff auf bereits bekannte Sollparameterwerte, die z.B. in einer Vorrichtung zur Justierung einer Heizungsregelung in einem Speicher abgelegt sind. Natürlich kann auf die Sollparameterwerte auch über ein Netzwerk zugegriffen werden. Im Wesentlichen kommt es nur darauf an, dass für einen Vergleich mit Istparameterwerten die Sollparameterwerte in irgendeiner Weise zur Verfügung stehen.

Bevorzugt wird im Zuge des erfindungsgemäßen Verfahrens das Auftragen und Verfestigen einer Schicht für genau n Schichten durchgeführt, wobei n eine natürliche Zahl ist, die kleiner oder gleich der Maximalzahl der während der Herstellung aufgetragenen Schichten ist. Auf diese Weise kann nicht nur zu Beginn eines Herstellungsvorgangs, sondern auch während des Herstellungsvorgangs laufend die Einhaltung der Regelungsziele überwacht werden, so dass ein unerwünschtes Verhalten der Heizungsregelung sofort automatisch korrigiert werden kann. Dies steigert die Qualität der hergestellten Objekte infolge der genaueren Temperaturkontrolle.

Weiter bevorzugt wird das Verfahren auch vor dem Auftragen und Verfestigen der ersten Schicht zur Herstellung der Anzahl von Objekten durchgeführt, indem zu Testzwecken ein oder mehrere Aufbaumaterialschichten aufgetragen werden zur Ermittlung und Abänderung des Regelverhaltens der Heizungsregelung. Auf diese Weise kann bereits bei der Installation einer generativen Schichtbauvorrichtung diese selbständig eine Justierung der in ihr verwendeten Heizungsregelung vornehmen, sodass Bauvorgänge von Beginn an mit einer justierten Heizungsregelung ablaufen können.

Eine erfindungsgemäße Steuereinheit zur Aus- und/oder Nachrüstung einer generativen Schichtbauvorrichtung, wobei die Steuereinheit zur Durchführung eines erfindungsgemäßen Verfahrens ausgelegt ist, enthält eine erfindungsgemäße Vorrichtung zur Justierung einer Heizungsregelung und/oder ist mit einer solchen signaltechnisch verbunden, wobei die generative Schichtbauvorrichtung geeignet ist, eine Anzahl von Objekten durch schichtweisen Auftrag von Aufbaumaterialschichten, insbesondere Pulverschichten, aufeinander herzustellen, indem in einer Mehrzahl der Aufbaumaterialschichten die den Querschnitten der Objekte in dieser Aufbaumaterialschicht entsprechenden Stellen mittels Strahlung verfestigt werden, und wobei die generative Schichtbauvorrichtung aufweist:

eine Bauunterlage zum Tragen des zu bildenden Objektes;
eine Auftragsvorrichtung zum Aufbringen einer Aufbaumaterialschicht auf die Oberfläche der Bauunterlage oder eine bereits vorhandene Schicht,
eine Bestrahlungsvorrichtung, die elektromagnetische Strahlung oder Teilchenstrahlung emittiert und in der Lage ist, alle in einer Schicht zu verfestigenden Stellen so zu bestrahlen, dass das Aufbaumaterial an diesen Stellen durch die durch die Strahlung eingebrachte Wärmeenergie teilweise oder vollständig aufgeschmolzen und/oder verbunden wird, so dass es nach einer Abkühlung an diesen Stellen in sich verbunden als Festkörper vorliegt, eine Heizvorrichtung zur Aufheizung einer aufgetragenen Aufbaumaterialschicht auf eine Arbeitstemperatur und eine Heizungsregelung, die die Aufheizung einer aufgetragenen Aufbaumaterialschicht mittels der Heizvorrichtung auf die Arbeitstemperatur regelt und in der Lage ist, auf der Grundlage mindestens eines Regelparameters den Wert mindestens einer vorbestimmten Regelgröße durch Abändern des Werts mindestens einer vorbestimmten Stellgröße zu regeln,
wobei die Steuereinheit geeignet ist, die Auftragsvorrichtung und die Bestrahlungsvorrichtung so zu steuern, dass ein Aufbaumaterialauftragsschritt und ein Verfestigungsschritt nacheinander so oft wiederholt werden, bis alle Querschnitte des mindestens einen herzustellenden dreidimensionalen Objekts verfestigt sind.

Eine erfindungsgemäße generative Schichtbauvorrichtung zur Herstellung einer Anzahl von Objekten durch schichtweisen Auftrag von Aufbaumaterialschichten aufeinander, indem in jeder der Aufbaumaterialschichten die den Querschnitten der Objekte in dieser Aufbaumaterialschicht entsprechenden Stellen mittels Strahlung verfestigt werden, weist auf:

eine Bauunterlage zum Tragen des zu bildenden Objektes;
eine Auftragsvorrichtung zum Aufbringen einer Aufbaumaterialschicht auf die Oberfläche der Bauunterlage oder eine bereits vorhandene Schicht,
eine Bestrahlungsvorrichtung, die elektromagnetische Strahlung oder Teilchenstrahlung emittiert und in der Lage ist, alle in einer Schicht zu verfestigenden Stellen so zu bestrahlen, dass das Aufbaumaterial an diesen Stellen durch die durch die Strahlung eingebrachte Wärmeenergie teilweise oder vollständig aufgeschmolzen und/oder verbunden wird, so dass es nach einer Abkühlung an diesen Stellen in sich verbunden als Festkörper vorliegt,
eine Heizvorrichtung zur Aufheizung einer aufgetragenen Aufbaumaterialschicht auf eine Arbeitstemperatur,
eine Heizungsregelung, die die Aufheizung einer aufgetragenen Aufbaumaterialschicht mittels der Heizvorrichtung auf eine Arbeitstemperatur regelt und in der Lage ist, auf der Grundlage mindestens eines Regelparameters den Wert mindestens einer vorbestimmten Regelgröße durch Abändern des Werts mindestens einer vorbestimmten Stellgröße zu regeln, und
eine erfindungsgemäße Steuereinheit.

Mit der erfindungsgemäßen Steuereinheit und der erfindungsgemäßen generativen Schichtbauvorrichtung werden einem Nutzer Vorrichtungen an die Hand gegeben, die die Bedienung der generativen Schichtbauvorrichtung sehr erleichtern.
Ein erfindungsgemäßes Computerprogramm ist in eine Steuereinheit und/oder eine generative Schichtbauvorrichtung ladbar mit Programmcodemitteln, um alle Schritte eines erfindungsgemäßen Verfahrens auszuführen, wenn das Computerprogramm auf der Steuereinheit und/oder der generativen Schichtbauvorrichtung ausgeführt wird. Indem das erfindungsgemäße Verfahren zur Justierung einer Heizungsregelung und die zugehörige erfindungsgemäße Vorrichtung mittels eines Computerprogramms realisiert werden ist insbesondere eine einfache Nachinstallation auf bereits existierenden Steuereinheiten und/oder generativen Schichtbauvorrichtungen möglich.
Weitere Merkmale und Zweckmäßigkeiten der Erfindung ergeben sich aus der Beschreibung von Ausführungsbeispielen anhand der beigefügten Zeichnungen.

Fig. 1   ist eine schematische, teilweise im Schnitt dargestellte Ansicht einer Vorrichtung zum generativen Herstellen eines dreidimensionalen Objekts gemäß einer Ausführungsform der Erfindung.

Fig. 2   sind zwei Diagramme, welche den zeitlichen Verlauf der Temperatur und den parallelen Verlauf der Heizleistung zeigen.

Fig. 3   ist ein Diagramm, welches schematisch die Schritte des erfindungsgemäßen Verfahrens zur Justierung einer Heizungsregelung in einer generativen Schichtbauvorrichtung darstellt.

Fig. 4   ist ein Diagramm, welches schematisch den Aufbau einer erfindungsgemäßen Vorrichtung zur Justierung einer Heizungsregelung in einer generativen Schichtbauvorrichtung darstellt.

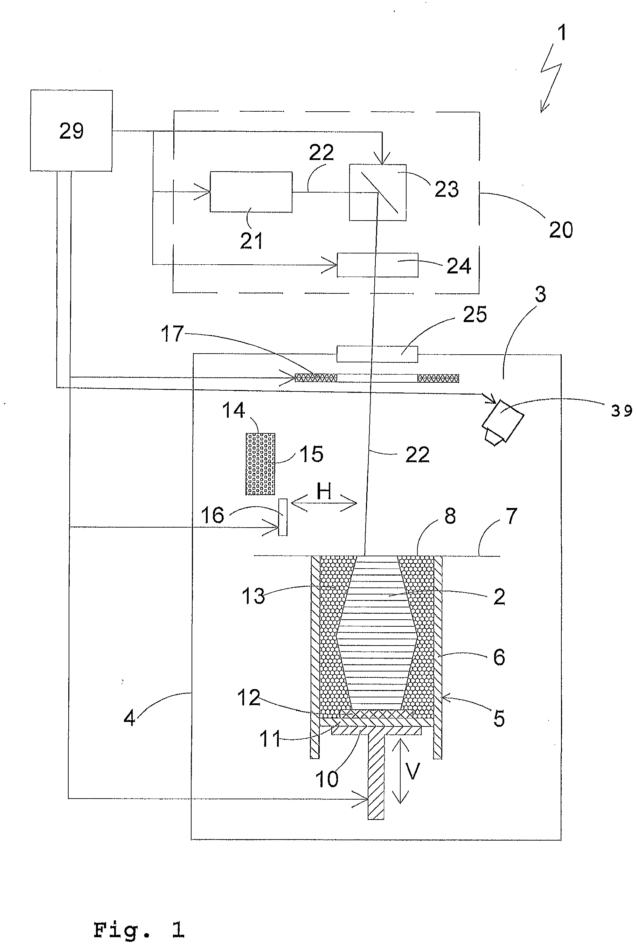

Für eine Beschreibung des erfindungsgemäßen Vorgehens soll zunächst nachfolgend am Beispiel einer Lasersinter- oder schmelzvorrichtung eine erfindungsgemäße generative Schichtbauvorrichtung unter Bezugnahme auf Fig. 1 beschrieben werden.
Zum Aufbauen eines Objekts 2 enthält die Lasersinter- oder Laserschmelzvorrichtung 1 eine Prozesskammer oder Baukammer 3 mit einer Kammerwandung 4.

In der Prozesskammer 3 ist ein nach oben offener Behälter 5 mit einer Behälterwandung 6 angeordnet. Durch den Rand der oberen Öffnung des Behälters 5 wird eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Weiterhin ist in der Prozesskammer 3 eine Heizvorrichtung 17, z.B. eine Strahlungsheizung, angeordnet, die zum Beheizen des aufgebrachten Aufbaumaterials 15 dient. Als Strahlungsheizung kann beispielsweise ein Infrarotstrahler vorgesehen sein. Darüberhinaus kann die Heizvorrichtung 17 auch alternativ oder zusätzlich die Grundplatte 11 bzw. Bauplattform 12 und/oder die Wandung des Behälters 5 beheizen (z.B. durch einen Heizwiderstand).

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Die Steuereinheit 29 wird über einen Steuerbefehlssatz angesteuert, der u.a. Daten enthält, die die Struktur der herzustellenden Anzahl von Objekten beinhalten, insbesondere ein dreidimensionales CAD-Schichtenmodell der Objekte mit Informationen über den jeweiligen Querschnitt eines Objekts in jeder zu verfestigenden Schicht des Aufbaumaterials, und Daten, die die genauen Parameter beim Verfestigen des Aufbaumaterials festlegen. Insbesondere enthalten die Daten genaue Informationen über jede zu verfestigende Schicht bei der Herstellung der Anzahl von Objekten. Wie ein Steuerbefehlssatz im Detail aussieht, ist im Stand der Technik hinreichend beschrieben und wird hier nicht näher erläutert, da dies nicht Bestandteil der vorliegenden Erfindung ist.

Im Betrieb wird durch die Steuereinheit 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Fig. 1 zeigt weiterhin eine Temperaturmesseinrichtung 39, die zwar innerhalb der Prozesskammer 3 und damit als Teil der Lasersintervorrichtung 1 gezeigt ist, jedoch durchaus auch außerhalb der Prozesskammer 3 angeordnet sein kann. Solch eine Temperaturmesseinrichtung kann beispielsweise ein oder mehrere Punktpyrometer umfassen, die an einer oder mehreren Stellen innerhalb des Baufeldes 8 die Temperatur des Aufbaumaterials messen, bzw. beispielsweise eine Infrarotkamera, mittels derer die Temperatur entweder in einem Teilbereich des Baufeldes 8 oder aber im gesamten Baufeld 8 ermittelt wird.

Neben dem Lasersintern zählen zu den von der Erfindung abgedeckten generativen Schichtbauverfahren all jene Verfahren, bei denen durch einen Strahlungsenergieeintrag eine Verfestigung des Aufbaumaterials herbeigeführt wird, also z.B. ein Laserschmelzverfahren, Maskenverfahren, bei denen zum selektiven Verfestigen einer Materialschicht Masken verwendet werden, Stereolithografieverfahren, etc. Auch eine Anwendung in einem Schmelzschichtungs- (von engl. Fused Deposition Modelling)-Verfahren ist möglich. Die oben beispielhaft beschriebene generative Schichtbauvorrichtung hat naturgemäß einen anderen aus dem Stand der Technik bekannten Aufbau, falls es sich bei dem Verfahren nicht um ein Lasersinter- oder Schmelzverfahren handelt. Ebenso umfasst eine erfindungsgemäße generative Schichtbauvorrichtung für ein Lasersinter- oder Schmelzverfahren auch apparative Abwandlungen gegenüber dem oben beschriebenen Beispiel.

Die Belichtungsvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann an Stelle eines Lasers jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Als Aufbaumaterial können alle für das Lasersinter- oder Schmelzverfahren geeigneten Pulver, Pulvermischungen bzw. pastosen Materialien verwendet werden. Solche Materialien umfassen z.B. Kunststoff wie Polyamid oder Polystyrol, PEAK (Polyaryl Ether Ketone), Elastomere, wie PEBA (Polyether Block Amide), kunststoffbeschichteten Sand, Keramik sowie Metalle, wie zum Beispiel Edelstahl, insbesondere auch Legierungen oder spezielle an den jeweiligen Zweck angepasste Metallpulver. In einem Stereolithographieverfahren können Photopolymere, z.B. Acryl-Epoxid- oder Vinylesterharze, zum Einsatz kommen.

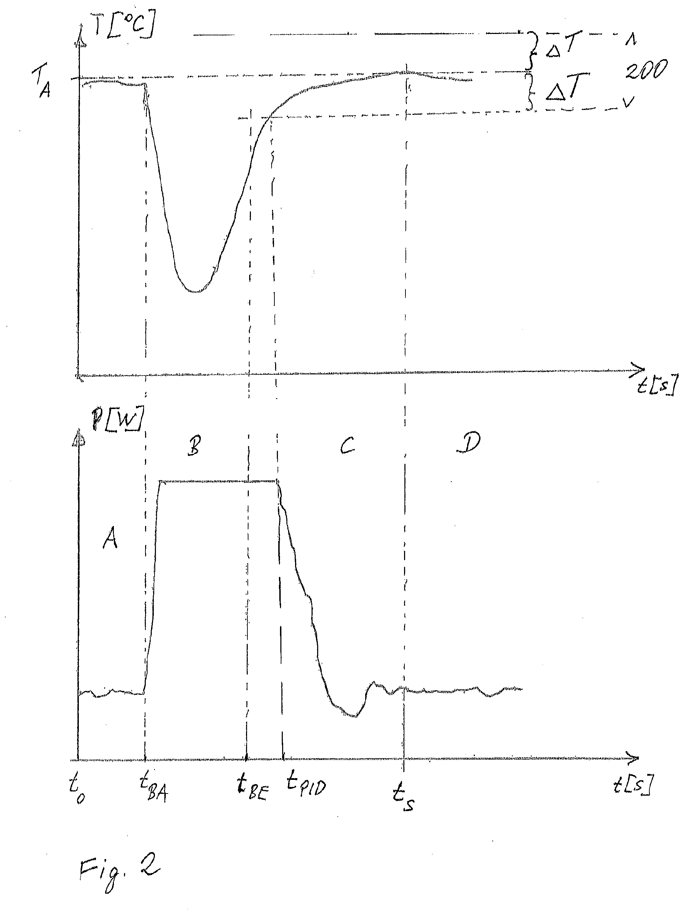

Im Folgenden wird eine erfindungsgemäße Regelung der Heizvorrichtung 17, beispielsweise einer Strahlungsheizung, unter Bezugnahme auf Fig. 2 beschrieben. Wie bereits erwähnt, dient die Heizvorrichtung 17 in einer Lasersinter- oder - schmelzvorrichtung u.a. zum Aufheizen einer neu aufgetragenen Aufbaumaterialschicht auf eine Arbeitstemperatur $T_A$, bei welcher eine Verfestigung des Aufbaumaterials durch die mittels Strahlung zusätzlich eingetragene Wärmemenge erfolgen soll. Es handelt sich bei der Arbeitstemperatur $T_A$ um eine Ziel-Temperatur des Aufbaumaterials, die möglichst näherungsweise ein Optimum für die Verfestigung mittels der Strahlung gewährleistet und z.B. durch Vorversuche mit dem Aufbaumaterial ermittelt werden kann oder anhand der Erfahrungen aus vorhergehenden Verfestigungsvorgängen des Aufbaumaterials bekannt ist. Sofern es Temperaturunterschiede im Baufeld gibt, ist mit der Arbeitstemperatur $T_A$ die mittlere im Baufeld in einer zu verfestigenden Schicht vorhandene Temperatur des Aufbaumaterials gemeint, die dieses bevorzugt bei der Verfestigung haben sollte.

Beim Vorheizen des Aufbaumaterials soll dabei die Wärmemenge bevorzugt möglichst gleichmäßig in die Aufbaumaterialschicht eingebracht werden, um die Temperaturunterschiede zwischen verfestigten und nicht-verfestigten Bereichen in einer Aufbaumaterialschicht möglichst gering zu halten, um Verzug bzw. Spannungen zu vermeiden. Eine durch z.B. einen Laserstrahl lokal eingebrachte hohe Wärmemenge führt nämlich zu hohen Temperaturunterschieden zwischen der Auftreffstelle des Strahls und ihrer Umgebung. Die Arbeitstemperatur $T_A$ sollte daher so nahe wie möglich bei der Temperatur, bei der die Verfestigung stattfindet, liegen, ohne jedoch bereits eine Verfestigung ohne Mitwirken der zur Verfestigung verwendeten Strahlung hervorzurufen.

Innerhalb einer Aufbaumaterialschicht gibt es Temperaturschwankungen nicht nur infolge der aktuellen Bestrahlung durch die zur Verfestigung verwendete Strahlung. Vielmehr führen auch unterhalb einer neu aufgetragenen Aufbaumaterialschicht vorhandene, bereits verfestigte (und somit heiße) Stellen dazu, dass es zu Temperaturinhomogenitäten in der neu aufgetragen Schicht kommt. Weiterhin spielen auch das Wärmeableitvermögen von den das Baufeld umgebenden Komponenten der generativen Schichtbauvorrichtung sowie Effekte einer eventuell verwendeten Schutzgasströmung eine Rolle.

Zur Regelung der Heizvorrichtung 17 ist es erforderlich, mittels eines Detektors die Temperatur der obersten Schicht, die selektiv verfestigt werden soll, an einer oder mehreren Stellen zu messen. In Fig. 1 ist für diesen Zweck eine in der Prozesskammer 3 oberhalb des Baufeldes 8 angeordnete Temperaturmesseinrichtung 39 gezeigt. Auf der Grundlage der von der Temperaturmesseinrichtung 39 ermittelten Temperaturinformationen regelt dann die Steuereinheit 29 die Heizvorrichtung 17 so, dass die Temperatur im Messbereich der Temperaturmesseinrichtung 39 innerhalb des Baufelds möglichst nah an der Arbeitstemperatur liegt. Dies wird unter Bezugnahme auf Fig. 2 im Folgenden genauer beschrieben.

Fig. 2 zeigt in der oberen Hälfte die von der Temperaturmesseinrichtung 39 an einer bestimmten Stelle im Baufeld ermittelte Temperatur T (in °C ohne Skalierung der T-Achse) in Abhängigkeit von der Zeit t (in Sekunden ohne Skalierung der t-Achse). Natürlich kann es sich bei der Temperatur T auch um einen Mittelwert aus an mehreren Stellen des Messbereichs, insbesondere allen Stellen, ermittelten Temperaturen handeln. In der Fig. 2 wird jedoch angenommen, dass der Messbereich der Temperaturmesseinrichtung 39 nicht das gesamte Baufeld abdeckt.

Die untere Hälfte der Fig. 2 zeigt die Heizleistung P (in W ohne Skalierung der P-Achse) der Heizvorrichtung 17 in Abhängigkeit von der Zeit t, wobei die Zeitachse in der oberen und unteren Hälfte der Fig. 2 dieselbe ist, d.h. insbesondere die Zeiteinheiten in der oberen und unteren Hälfte der Fig. 2 identisch sind.

Der Zeitpunkt to charakterisiert den Zeitpunkt, an dem der Beschichter 16 anfängt, sich in horizontaler Richtung H über das Baufeld 8 zu bewegen (siehe Fig. 1).

Der Zeitpunkt $t_{BA}$ charakterisiert den Zeitpunkt, ab dem an der von der Temperaturmesseinrichtung 39 erfassten Stelle bzw. in dem Messbereich der Temperaturmesseinrichtung 39 durch den Beschichter 16 frisch aufgetragenes Aufbaumaterial 15 vorhanden ist. Mit anderen Worten, zwischen den Zeitpunkten to und $t_{BA}$ misst die Temperaturmesseinrichtung nicht die Temperatur des neu aufgebrachten Aufbaumaterials, sondern jene einer bereits selektiv verfestigten zuoberst liegenden Aufbaumaterialschicht. Der Einfachheit halber sei hier angenommen, dass in der in Fig. 2 dargestellten Situation keine Verfestigung innerhalb des Messbereichs dieser Schicht stattgefunden habe. Der Zeitbereich zwischen to und $t_{BA}$ ist in Fig. 2 mit dem Buchstaben A charakterisiert.

Ab dem Zeitpunkt $t_{BA}$ liegt innerhalb des Messbereichs in zunehmendem Maße frisch aufgetragenes Pulver einer niedrigeren Temperatur T vor. Man erkennt daher in der oberen Hälfte der Fig. 2 ein Absinken der von der Temperaturmesseinrichtung 39 ermittelten Temperatur T. Die Temperatur T sinkt dabei bis auf einen Minimalwert ab und steigt danach wieder an. Der Wiederanstieg der Temperatur nach Erreichen eines Minimums ist bedingt durch eine Erhöhung der Heizleistung der Heizvorrichtung ab dem Zeitpunkt $t_{BA}$, wie sie in Fig. 2 in der unteren Hälfte dargestellt ist. Als Antwort auf die von der Temperaturmesseinrichtung 39 übermittelte fallende Temperatur regelt nämlich die Steuereinheit 29 die Heizleistung innerhalb kurzer Zeit bis zu einem Plateauwert (Maximalwert) hinauf. Durch die erhöhte Heizleistung wird damit ein zu starker Temperaturabfall kompensiert.

In Fig. 2 ist als weiterer Zeitpunkt $t_{BE}$ jener Zeitpunkt dargestellt, ab dem der Beschichter den Messbereich der Temperaturmesseinrichtung verlassen hat, mit anderen Worten jener Zeitpunkt, zu dem der Beschichter 16 im gesamten Messbereich neues Aufbaumaterial aufgetragen hat. Der Zeitbereich zwischen $t_{BA}$ und $t_{BE}$ ist in Fig. 2 mit dem Buchstaben B charakterisiert.

Sobald die von der Temperaturmesseinrichtung 39 erfasste Temperatur des Aufbaumaterials sich der Arbeitstemperatur bis auf eine Differenz $\Delta T$, die im Vorhinein festgelegt wird, angenähert hat, verringert die Steuereinheit 29 wieder die Heizleistung P. In Fig. 2 charakterisiert $t_{PID}$ jenen Zeitpunkt, ab dem sich die von der Temperaturmesseinrichtung 39 ermittelte Temperatur bis auf einen Wert $\Delta T$ an die Arbeitstemperatur angenähert hat. Schließlich wird zum Zeitpunkt ts die Arbeitstemperatur erreicht. In der Fig. 2 ist der Zeitbereich zwischen $t_{PID}$ und $t_s$ mit dem Buchstaben C gekennzeichnet.

Ab dem Zeitpunkt ts versucht dann die Heizungsregelung, die Temperatur stets innerhalb eines Regelbereichs 200 zwischen $T_A$-$\Delta T$ und $T_A$+$\Delta T$ zu halten. In der Fig. 2 ist dies dadurch gekennzeichnet, dass in dem mit dem Buchstaben D bezeichneten Zeitbereich sowohl die Temperatur als auch die Heizleistung einigermaßen horizontal verlaufen. Der Zeitpunkt ts könnte beispielsweise auch jener Zeitpunkt sein, zu dem die Steuereinheit 29 den Start des selektiven Verfestigens des Aufbaumaterials in der soeben aufgetragenen Aufbaumaterialschicht mittels der Belichtungsvorrichtung 20 veranlasst.

Bei der Regelung kann es sich beispielsweise um eine stetige Regelung mit beispielsweise P-, PI-, PD- oder PID-Verhalten handeln. Damit kann die Temperatur so geregelt werden, dass sie sich stets innerhalb des Regelbereichs 200 zwischen $T_A$-$\Delta t$ und $T_A$+$\Delta T$ befindet. Denkbar wäre aber auch eine unstetige Regelung. Die Regelung selbst kann sowohl analog als auch digital arbeiten.

Wie bereits in der Einleitung erwähnt wurde, haben die Erfinder erkannt, dass es Unterschiede von generativer Schichtbauvorrichtung zu generativer Schichtbauvorrichtung gibt, beispielsweise durch unterschiedliches Wärmeableitvermögen im Bereich des Baufeldes. Die Erfinder kommen hier zu dem Schluss, dass die Regelungsparameter individuell für eine bestimmte Schichtbauvorrichtung gewählt werden sollten. Beispielsweise könnte bei einer Schichtbauvorrichtung mit einer starken Wärmeableitung vom Baufeld weg eine voreingestellte Heizleistung zu einer kleineren Temperaturerhöhung pro Zeit im Baufeld führen, was die Regelzeit bis zum Erreichen der Arbeitstemperatur (in Fig. 2 ist dies ts - to) verlängern würde. Da sich aber der Installationsvorgang für eine generative Schichtbauvorrichtung nicht dadurch verkomplizieren sollte, dass die mit der Installation befassten Bediener genaue Kenntnis über das individuelle Verhalten der Schichtbauvorrichtung haben müssen, wird vorgeschlagen, die Einstellung der Regelungsparameter automatisch vorzunehmen.

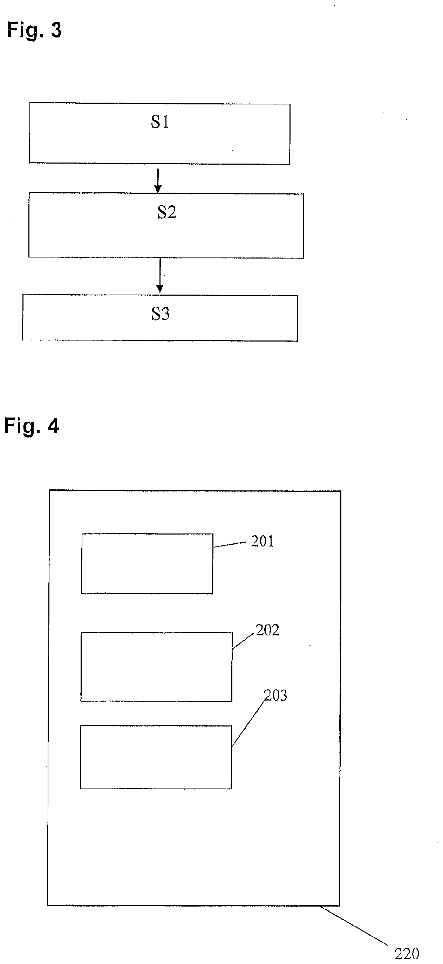

In Fig. 4 ist schematisch eine Vorrichtung 220 zur automatischen Justierung der Heizungsregelung in einer generativen Schichtbauvorrichtung gezeigt. Die Arbeitsweise der Vorrichtung 220 in Fig. 4 wird mit Bezug auf Fig. 3 erläutert. Die Vorrichtung 220 in Fig. 4 kann dabei einerseits Bestandteil der Steuereinheit 29 sein, beispielsweise als Softwaremodul, das auf der Steuereinheit 29 installiert ist, andererseits kann die Vorrichtung 220 aber auch als von der Steuereinheit 29 getrenntes Modul vorhanden sein, welches entweder mit der Steuereinheit 29 und eventuell auch mit der Temperaturerfassungseinheit 39 für einen Datenaustausch verbunden ist. Weiterhin muss die Vorrichtung 220 nicht räumlicher Bestandteil der generativen Schichtbauvorrichtung sein, sondern kann auch außerhalb von dieser angeordnet sein und lediglich über eine Datenverbindung mit dieser verbunden sein.

Die Vorrichtung 220 zur Justierung einer Heizungsregelung enthält zunächst eine Sollparameter-Bereitstellungseinheit 201. Sollparameter sind dabei beispielsweise:

- mit der Heizungsregelung angestrebte Zielwerte für Regelgrößen der Heizungsregelung, also z.B. die Arbeitstemperatur $T_A$,
- die Änderung von Regelgrößen mit der Zeit, also beispielsweise die maximale oder minimale Änderung der Temperatur des Aufbaumaterials mit der Zeit an einer bestimmten Stelle,
- die maximale Zeitdauer für das Aufheizen des Aufbaumaterials auf die Arbeitstemperatur $T_A$ ab dem Beginn des Auftrags einer neuen Aufbaumaterialschicht (also in Fig. 2 der Zeitraum zwischen ts und to),
- die Regelgüte der Heizungsregelung. Die Regelgüte ist in der Regelungstechnik ein Maß für die Präzision des Einhaltens eines Zielwerts für eine Regelgröße. Beispielsweise könnte die Güte der Regelung mittels des ITAE-Kriteriums ermittelt werden, bei dem beispielsweise Abweichungen der Temperatur von der Arbeitstemperatur während der Regelung aufsummiert werden, wobei die Abweichungen gegenüber der Arbeitstemperatur $T_A$ mit der Zeitdauer der Abweichung gewichtet werden. Eine andere Möglichkeit, die Güte der Regelung zu beurteilen, wäre es, die maximale Abweichung der Temperatur von der Arbeitstemperatur während des Regelzeitraums als Gütekriterium zu wählen.

Mit dem Begriff "Bereitstellung" ist gemeint, dass die Sollparameter-Bereitstellungseinheit 201 die Werte von der Justierung der Heizungsregelung zugrunde zu legenden Sollparametern beispielsweise aus einem Speicher liest oder aber diese Sollparameter von einer Eingabevorrichtung entgegennimmt, an welcher ein Nutzer Werte dieser Sollparameter eingibt. Die Speichervorrichtung, in der die Sollparameterwerte abgespeichert sind, kann beispielsweise Bestandteil der Vorrichtung 220 zur Justierung der Heizungsregelung sein oder aber die Vorrichtung 220 ist über eine Datenverbindung mit solch einem Speicher verbunden, der dann entweder in der Steuereinheit 29 oder in einer anderen von der generativen Schichtbauvorrichtung räumlich getrennten Datenverarbeitungsvorrichtung vorhanden ist. Hier gibt es viele Gestaltungsmöglichkeiten, die dem Fachmann unmittelbar einsichtig sind. Eine Dateneingabevorrichtung, an der ein Nutzer die Sollparameterwerte eingeben kann, kann entweder an der generativen Schichtbauvorrichtung vorhanden sein oder aber räumlich getrennt von der generativen Schichtbauvorrichtung, jedoch mit dieser und insbesondere mit der Vorrichtung 220 über eine Datenverbindung verbunden, sein. Die genaue Implementierung der Dateneingabeschnittstelle kann in üblicher Weise geschehen, insbesondere auch unter Zuhilfenahme grafischer Elemente auf einem Anzeigebildschirm.

Bei einer Abwandlung der Erfindung ist die Sollparameter-Bereitstellungseinheit 201 in der Lage, die der Justierung zugrunde zu legenden Sollparameter und nicht nur deren Werte entgegenzunehmen. Wiederum können in solch einem Fall die Sollparameter aus einem Speicher entnommen werden oder an einer Nutzereingabeschnittstelle entgegengenommen werden. Bei dieser Abwandlung kann dann die Vorrichtung 220 ihre Arbeitsweise in Abhängigkeit von den entgegengenommenen Sollparametern wählen. Beispielsweise kann die Vorrichtung 220 so ausgelegt sein, dass mehrere Arbeitsweisen möglich sind, sodass durch die Eingebe eines bestimmten Satzes von Sollparametern die Vorrichtung 220 veranlasst wird, die Justierung gerade basierend auf diesen Sollparameter(werte)n durchzuführen.

Weiterhin enthält die Vorrichtung 220 zur Justierung der Heizungsregelung eine Istparameter-Erfassungseinheit 202. Diese erfasst den tatsächlichen Wert eines einem Sollparameter zugeordneten Parameters, also beispielsweise, wenn es sich bei dem Sollparameter um die Arbeitstemperatur $T_A$ handelt, die tatsächlich in der generativen Schichtbauvorrichtung vorliegende (ggf. mittlere) Arbeitstemperatur $T_A$. Hierzu ist beispielsweise die Vorrichtung 220 mit der Temperaturmesseinrichtung 39 signaltechnisch verbunden oder aber die Vorrichtung 220 empfängt die von der Temperaturmesseinrichtung 39 erfassten Messdaten (ggf. nachdem diese aufbereitet wurden) von der Steuereinheit 29. Wenn es sich bei dem Sollparameter um die zeitliche Änderung der Temperatur des Aufbaumaterials handelt, so kann anhand der Messdaten der Temperaturmesseinrichtung 39 das tatsächlich in der generativen Schichtbauvorrichtung vorliegende zeitliche Verhalten durch die Istparameter-Erfassungseinheit 202 ermittelt werden. Gleiches gilt für andere Sollparameter, wie beispielsweise die Regelgüte oder die Zeitdauer für das Aufheizen des Aufbaumaterials auf die Arbeitstemperatur $T_A$ ab dem Beginn des Auftrags einer neuen Aufbaumaterialschicht.

Das Bezugszeichen 203 in Fig. 4 bezeichnet schließlich eine Regeländerungseinheit, in welcher die vorgegebenen Sollparameterwerte mit den erfassten Istparameterwerten verglichen werden. Sofern ein Unterschied zwischen einem Sollparameterwert und dem erfassten Istparameterwert größer ist als eine vordefinierte Abweichung, führt die Regeländerungseinheit 203 automatisch eine Änderung mindestens eines Regelparameterwerts der Heizungsregelung durch. Beispiele für mögliche Regelparameter sind folgende:

- Die Größe des Stellbereichs mindestens einer der Stellgrößen der Heizungsregelung, also beispielsweise die maximal zulässige Heizleistung $P_{max}$ der Heizvorrichtung 17 während des Regelungsvorgangs. Die zur Verfügung stehende Heizleistung ist normalerweise durch die Eigenschaften der Heizvorrichtung 17 vorgegeben. Mit der maximal zulässigen Heizleistung $P_{max}$ während des Regelungsvorgangs ist hier im Gegensatz dazu eine Heizleistung gemeint, die maximal der von der Heizvorrichtung 17 lieferbaren Heizleistung entspricht, also durchaus niedriger als die zur Verfügung stehende Heizleistung sein kann.
- Die minimale oder maximale Änderung der Heizleistung pro Zeit.
- Die Größe des Regelbereichs 200; damit wird festgelegt, wie stark die tatsächliche Temperatur des Aufbaumaterials während der Regelung im Bereich D in Fig. 2 von der Arbeitstemperatur $T_A$ abweichen darf. Insbesondere kann dieser Regelbereich 200 auch eine Lücke aufweisen, so dass z.B. bei nur sehr kleinen Abweichungen gegenüber der Arbeitstemperatur $T_A$ keine Regelung stattfindet.
- Die Art der Regelung; hiermit sind insbesondere bei einem PID-Regler die spezifischen Parameter des P- und/oder I- und/oder D-Anteils gemeint, wie zum Beispiel die Höhe des proportionalen Anteils an der Verstärkung beim P-Anteil oder die Nachstellzeit beim I-Anteil oder die Vorhaltzeit beim D-Anteil. Natürlich gilt dies analog auch für PI-, PD- und PT-Regelungen. Insbesondere können durch die letztgenannten Änderungen auch Überschwinger beim Regeln der Arbeitstemperatur $T_A$ in ihrer Größe begrenzt werden.

Bevorzugt enthält die Regeländerungseinheit 203 eine Prozessoreinheit zur Ermittlung der zu verändernden Regelparameterwerte. Wie beim Vorliegen einer Abweichung zwischen einem Sollparameterwert und einem Istparameterwert bei der Änderung der Regelparameterwerte im Detail vorgegangen werden muss, ist einem Fachmann auf dem Gebiet der Regelungstechnik bekannt, so dass ein entsprechender automatischer Algorithmus für solch einen Fachmann auf einfache Weise implementierbar ist. Insbesondere ist es auch möglich, sich zur Ermittlung der Vorgehensweise, welche Regelparameterwerte wie verändert werden sollen, einer Fuzzy-Regelung zu bedienen oder aber eines neuronalen Netzes und/oder eines evolutionären Algorithmus, welche auf der Grundlage von in der Vergangenheit erfassten Abweichungen zwischen Sollparameterwerten und Istparameterwerten und/oder der Reaktion des Regelverhaltens auf eine in der Vergangenheit vorgenommene Regelparameteränderung eine Entscheidung treffen. Insbesondere ist es auch möglich, vor dem Auftragen und Verfestigen der ersten Schicht zur Herstellung von Objekten ein oder mehrere Aufbaumaterialschichten lediglich zu Testzwecken aufzutragen zur Ermittlung des Regelungsverhaltens der Heizungsregelung bei Abänderungen der Regelparameter.

Insbesondere kann es sich bei der Regeländerungseinheit 203 um ein selbstlernendes System handeln, das während eines generativen Schichtbauverfahrens ständig dazu lernt.

Wie in Fig. 3 dargestellt enthält ein Verfahren zur Justierung einer Heizungsregelung die Schritte S1 (Bereitstellen von Sollparameterwerten), S2 (Erfassen der zu den Sollparameterwerten zugehörigen Istparameterwerte) und S3 (Änderung mindestens eines Regelparameters, falls der Unterschied zwischen einem Sollparameterwert und einem erfassten zugehörigen Istparameterwert eine vorgegebene Abweichung überschreitet). Um Wiederholungen zu vermeiden, wird bezüglich des Verfahrensablaufs auf die obige Beschreibung der Vorrichtung 220 zur Justierung der Heizungsregelung verwiesen, wobei es eine Entsprechung gibt zwischen dem Schritt S1 und der Sollparameter-Bereitstellungseinheit 201, dem Schritt S2 und der Istparameter-Erfassungseinheit 202 sowie dem Schritt S3 und der Regeländerungseinheit 203 gibt.

Mit einer erfindungsgemäßen Vorrichtung zur Justierung der Heizungsregelung und einem erfindungsgemäßen Verfahren ist es möglich, nicht nur Schwankungen der Vorrichtungseigenschaften von Vorrichtung zu Vorrichtung zu begegnen. Vielmehr kann auch Schwankungen der Umgebungsbedingungen während eines Herstellvorgangs von Objekten in einer generativen Schichtbauvorrichtung begegnet werden. Beispielsweise kann es vorkommen, dass die Temperatur des neu aufgetragenen Aufbaumaterials von Bauvorgang zu Bauvorgang oder sogar von Schicht zu Schicht leicht variiert. Des Weiteren könnte es während des Herstellvorgangs zu Temperatureffekten einer Schutzgasströmung kommen oder aber das Aufheizverhalten könnte sich aufgrund wechselnder Schichtdicken ändern. Bislang war es angesichts eines automatisch ablaufenden Herstellvorgangs unmöglich, solchen Schwankungen zu begegnen. Mit der erfindungsgemäßen automatischen Justierung der Heizungsregelung kann jedoch nun die Qualität der hergestellten Objekte verbessert werden, indem auch solche Fluktuationen während des Herstellvorgangs ausgeglichen werden können.

Abschließend sei nochmals erwähnt, dass eine Vorrichtung 220 zur Justierung einer Heizungsregelung in einer generativen Schichtbauvorrichtung entweder allein durch Softwarekomponenten oder aber auch aus Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise wenn die darüber eingespeisten bzw. ausgegebenen Daten von bereits auf dem gleichen Gerät realisierten anderen Komponenten übernommen werden können oder an eine andere Komponente nur softwaremäßig übergeben werden müssen. Außerdem können mehrere Schnittstellen auch in einer gemeinsamen Schnittstelle, beispielsweise einer Input-Output-Schnittstelle, zusammengefasst sein. Insbesondere kann die Vorrichtung 220 in eine Steuereinrichtung 29 einer generativen Schichtbauvorrichtung integriert sein

## Patentansprüche

1. Generative Schichtbauvorrichtung mit einer Vorrichtung zur Justierung einer Heizungsregelung, wobei in der generativen Schichtbauvorrichtung eine Anzahl von Objekten durch schichtweisen Auftrag von Aufbaumaterialschichten, insbesondere Pulverschichten, aufeinander hergestellt werden kann, indem in einer Mehrzahl der Aufbaumaterialschichten die den Querschnitten der Objekte in dieser Aufbaumaterialschicht entsprechenden Stellen mittels Strahlung verfestigt werden, wobei die Heizungsregelung die Aufheizung einer aufgetragenen Aufbaumaterialschicht mittels einer Heizvorrichtung (17) auf eine Arbeitstemperatur ($T_A$) regelt und in der Lage ist, auf der Grundlage mindestens eines Regelparameters den Wert mindestens einer vorbestimmten Regelgröße durch Abändern des Werts mindestens einer vorbestimmten Stellgröße zu regeln,

    wobei die Vorrichtung aufweist:

    eine Sollparameter-Bereitstellungseinheit (201), die so ausgelegt ist, dass sie mindestens einen Sollparameterwert, also den Sollwert einer Regelgröße und/oder oder dessen Änderung mit der Zeit und/oder den Sollwert eines Heizungsparameters und/oder dessen Änderung mit der Zeit, bereitstellt,

eine Istparameter-Erfassungseinheit (202), die so ausgelegt ist, dass sie für mindestens einen der Sollparameterwerte den zugehörigen Istparameterwert in der Heizungsregelung oder der generativen Schichtbauvorrichtung erfassen kann, wobei ein Istparameterwert der tatsächliche Wert einer Regelgröße und/oder der tatsächliche Wert von deren Änderung mit der Zeit und/oder der tatsächlichen Wert eines Heizungsparameters und/oder der tatsächliche Wert von dessen Änderung mit der Zeit ist, und

eine Regeländerungseinheit (203), die bei Überschreiten einer vordefinierten Abweichung zwischen einem Sollparameterwert und seinem zugehörigen Istparameterwert mindestens einen Regelparameterwert automatisch verändert,

wobei es sich bei dem mindestens einen veränderten Regelparameter um mindestens eine der folgenden Größen handelt:

die maximal zulässige Heizleistung ($P_{max}$), die Größe des Stellbereichs mindestens einer der Stellgrößen, den Regelbereich (200) um die Arbeitstemperatur ($T_A$) herum, innerhalb dessen die Heizungsregelung tatsächlich regelt, die maximale und/oder minimale Änderung der Heizleistung mit der Zeit, mindestens einen Linearfaktor einer das Verhalten der Regelung beschreibenden Übertragungsfunktion, die P-Verstärkung, die Vorhaltezeit oder die Nachstellzeit eines Proportional-, Integral- oder Differentialanteils der Heizungsregelung.

2. Generative Schichtbauvorrichtung nach Anspruch 1, wobei die Vorrichtung zur Justierung einer Heizungsregelung als Stellgröße die Heizleistung der zur Aufheizung einer Aufbaumaterialschicht verwendeten Heizvorrichtung verwendet.

3. Generative Schichtbauvorrichtung nach einem der vorangegangenen Ansprüche, wobei es sich bei dem mindestens einen Sollparameter um mindestens eine der folgenden Größen handelt:
die Arbeitstemperatur ($T_A$), die maximale und/oder minimale Änderung der Temperatur des Aufbaumaterials mit der Zeit, die maximale Zeitdauer für das Aufheizen des Aufbaumaterials auf die Arbeitstemperatur ($T_A$) ab dem Beginn des Auftrags einer neuen Aufbaumaterialschicht, die Regelgüte.

4. Generative Schichtbauvorrichtungnach einem der vorangegangenen Ansprüche, wobei die Istparameter-Erfassungseinheit (202) die für die Aufheizung einer neu aufgetragenen Aufbaumaterialschicht auf die Arbeitstemperatur $T_A$ benötigte Zeit ermittelt und die Regeländerungseinheit (203) bei Überschreiten einer vorgegebenen Maximal-Aufheizzeit mindestens einen Regelparameterwert automatisch verändert.

5. Generative Schichtbauvorrichtung nach einem der vorangegangenen Ansprüche, wobei sich die Regeländerungseinheit zur Veränderung des mindestens einen Regelparameterwerts einer Fuzzy-Regelung bedient.

6. Generative Schichtbauvorrichtung nach einem der vorangegangenen Ansprüche, wobei sich die Regeländerungseinheit zur Veränderung des mindestens einen Regelparameterwerts eines neuronalen Netzes und/oder eines evolutionären Algorithmus bedient, welche auf von der Istparameter-Erfassungseinheit in der Vergangenheit erfasste Istparameterwerte zurückgreifen.

7. Verfahren zur Justierung einer Heizungsregelung in einer generativen Schichtbauvorrichtung, in der eine Anzahl von Objekten durch schichtweisen Auftrag von Aufbaumaterialschichten, insbesondere Pulverschichten, aufeinander hergestellt werden kann, indem in einer Mehrzahl der Aufbaumaterialschichten die den Querschnitten der Objekte in dieser Aufbaumaterialschicht entsprechenden Stellen mittels Strahlung verfestigt werden, wobei die Heizungsregelung die Aufheizung einer aufgetragenen Aufbaumaterialschicht mittels einer Heizvorrichtung auf eine Arbeitstemperatur regelt und auf der Grundlage mindestens eines Regelparameters den Wert mindestens einer vorbestimmten Regelgröße durch Abändern des Werts mindestens einer vorbestimmten Stellgröße regelt, wobei das Verfahren mindestens umfasst:

einen Schritt (S1) der Bereitstellung mindestens eines Sollparameterwerts, also des Sollwerts einer Regelgröße und/oder des Sollwerts von deren Änderung mit der Zeit und/oder des Sollwerts eines Heizungsparameters und/oder des Sollwerts von dessen Änderung mit der Zeit,

einen Schritt (S2) der Erfassung von zumindest einem zu dem mindestens einen Sollparameterwert zugehörigen Istparameterwert in der Heizungsregelung oder der generativen Schichtbauvorrichtung, wobei ein Istparameterwert der tatsächliche Wert einer Regelgröße und/oder der tatsächliche Wert von deren Änderung mit der Zeit und/oder der tatsächliche Wert eines Heizungsparameters und/oder der tatsächliche Wert von dessen Änderung mit der Zeit ist, und

einen Schritt (S3) der automatischen Veränderung mindestens eines Regelparameters bei Überschreiten einer vordefinierten Abweichung zwischen einem Sollparameterwert und seinem zugehörigen Istparameterwert wobei es sich bei dem mindestens einen veränderten Regelparameter um mindestens eine der folgenden Größen handelt:

die maximal zulässige Heizleistung ($P_{max}$), die Größe des Stellbereichs mindestens einer der Stellgrößen, den Regelbereich (200) um die Arbeitstemperatur ($T_A$) herum, innerhalb dessen die Heizungsregelung tatsächlich regelt, die maximale und/oder minimale Änderung der Heizleistung mit der Zeit, mindestens einen Linearfaktor einer das Verhalten der Regelung beschreibenden Übertragungsfunktion, die P-Verstärkung, die Vorhaltzeit oder die Nachstellzeit eines Proportional-, Integral- oder Differentialanteils der Heizungsregelung.

8. Verfahren nach Anspruch 8, in dessen Zuge das Auftragen und Verfestigen einer Schicht für genau n Schichten durchgeführt wird, wobei n eine natürliche Zahl ist, die kleiner oder gleich der Maximalzahl der während der Herstellung aufgetragenen Schichten ist.

9. Verfahren nach Anspruch 7 oder 8, durchgeführt vor dem Auftragen und Verfestigen der ersten Schicht zur Herstellung der Anzahl von Objekten, indem zu Testzwecken ein oder mehrere Aufbaumaterialschichten aufgetragen werden zur Ermittlung und Abänderung des Regelverhaltens der Heizungsregelung.

10. Steuereinheit (29) zur Aus- und/oder Nachrüstung einer generativen Schichtbauvorrichtung, wobei die Steuereinheit zur Durchführung eines Verfahrens nach einem der Ansprüche 7 bis 9 ausgelegt ist, wobei die Steuereinheit (29) eine Vorrichtung zur Justierung einer Heizungsregelung nach einem der Ansprüche 1 bis 6 enthält und/oder damit signaltechnisch verbunden werden kann, wobei die generative Schichtbauvorrichtung geeignet ist, eine Anzahl von Objekten durch schichtweisen Auftrag von Aufbaumaterialschichten, insbesondere Pulverschichten, aufeinander herzustellen, indem in einer Mehrzahl der Aufbaumaterialschichten die den Querschnitten der Objekte in dieser Aufbaumaterialschicht entsprechenden Stellen mittels Strahlung verfestigt werden, und wobei die generative Schichtbauvorrichtung aufweist:

eine Bauunterlage (11, 12) zum Tragen des zu bildenden Objektes (2); eine Auftragsvorrichtung (14, 16) zum Aufbringen einer Aufbaumaterialschicht auf die Oberfläche der Bauunterlage (11, 12) oder eine bereits vorhandene Schicht, eine Bestrahlungsvorrichtung (20), die elektromagnetische Strahlung oder Teilchenstrahlung (22) emittiert und in der Lage ist, alle in einer Schicht zu verfestigenden Stellen so zu bestrahlen, dass das Aufbaumaterial an diesen Stellen durch die durch die Strahlung eingebrachte Wärmeenergie teilweise oder vollständig aufgeschmolzen und/oder verbunden wird, so dass es nach einer Abkühlung an diesen Stellen in sich verbunden als Festkörper vorliegt, eine Heizvorrichtung (17) zur Aufheizung einer aufgetragenen Aufbaumaterialschicht auf eine Arbeitstemperatur und eine Heizungsregelung, die die Aufheizung einer aufgetragenen Aufbaumaterialschicht mittels der Heizvorrichtung auf die Arbeitstemperatur regelt und in der Lage ist, auf der Grundlage mindestens eines Regelparameters den Wert mindestens einer vorbestimmten Regelgröße durch Abändern des Werts mindestens einer vorbestimmten Stellgröße zu regeln,

wobei die Steuereinheit (29) geeignet ist, die Auftragsvorrichtung (14, 16) und die Bestrahlungsvorrichtung (20) so zu steuern, dass ein Aufbaumaterialauftragsschritt und ein Verfestigungsschritt nacheinander so oft wiederholt werden, bis alle Querschnitte des mindestens einen herzustellenden dreidimensionalen Objekts verfestigt sind.

11. Generative Schichtbauvorrichtung zur Herstellung einer Anzahl von Objekten durch schichtweisen Auftrag von Aufbaumaterialschichten aufeinander, indem in jeder der Aufbaumaterialschichten die den Querschnitten der Objekte in dieser Aufbaumaterialschicht entsprechenden Stellen mittels Strahlung verfestigt werden, und wobei die generative Schichtbauvorrichtung aufweist:

eine Bauunterlage (11, 12) zum Tragen des zu bildenden Objektes (2); eine Auftragsvorrichtung (14, 16) zum Aufbringen einer Aufbaumaterialschicht auf die Oberfläche der Bauunterlage (11, 12) oder eine bereits vorhandene Schicht, eine Bestrahlungsvorrichtung (20), die elektromagnetische Strahlung oder Teilchenstrahlung (22) emittiert und in der Lage ist, alle in einer Schicht zu verfestigenden Stellen so zu bestrahlen, dass das Aufbaumaterial an diesen Stellen durch die durch die Strahlung eingebrachte Wärmeenergie teilweise oder vollständig aufgeschmolzen und/oder verbunden wird, so dass es nach einer Abkühlung an diesen Stellen in sich verbunden als Festkörper vorliegt,

eine Heizvorrichtung (17) zur Aufheizung einer aufgetragenen Aufbaumaterialschicht auf eine Arbeitstemperatur,

eine Heizungsregelung, die die Aufheizung einer aufgetragenen Aufbaumaterialschicht mittels der Heizvorrichtung auf eine Arbeitstemperatur regelt und in der Lage ist, auf der Grundlage mindestens eines Regelparameters den Wert mindestens einer vorbestimmten Regelgröße durch Abändern des Werts mindestens einer vorbestimmten Stellgröße zu regeln, und

eine Steuereinheit (29) nach Anspruch 10.

12. Computerprogramm, das in eine Steuereinheit einer generativen Schichtbauvorrichtung ladbar ist, mit Programmcodemitteln, um alle Schritte eines Verfahrens gemäß einem der Ansprüche 7 bis 9 auszuführen, wenn das Computerprogramm auf der Steuereinheit der generativen Schichtbauvorrichtung ausgeführt wird.


**Claims**

1. An additive manufacturing device comprising a device for an adjustment of a heater control, wherein, in the additive manufacturing device, a number of objects can be manufactured by a layer-wise application of building material layers, in particular powder layers, on top of each other, in that in a plurality of building material layers the positions corresponding to the cross-sections of the objects in the respective building material layer are solidified by means of radiation, wherein the heater control regulates the heating of an applied building material layer by means of a heating device (17) up to a work temperature ($T_A$) and is able to regulate the value of at least one predetermined controlled variable based on at least one control parameter by changing the value of at least one predetermined manipulated variable, wherein the device comprises:

a nominal parameter provision unit (201) designed such that it provides at least one nominal parameter value, meaning the setpoint of a controlled variable and/or its change with time and/or the setpoint of a heater parameter and/or its change with time,

an actual parameter detection unit (202) designed such that it is able to detect for at least one of the nominal parameter values the corresponding actual parameter value in the heater control or in the additive manufacturing device, wherein an actual parameter value is the actual value of a controlled variable and/or the actual value of its change with time and/or the actual value of a heater parameter and/or the actual value of its change with time, and

a control change unit (203) that automatically changes at least one control parameter value, if a predefined difference between the nominal parameter value and its corresponding actual parameter value is exceeded, wherein the at least one control parameter that is changed is at least one of the following quantities:

the admissible maximum heating power ($P_{max}$), the size of the manipulation range of at least one of the manipulated variables, the controlled range (200) around the work temperature ($T_A$), within which the heater control actually performs a control, the maximum and/or minimum change of the heating power with time, at least one linear factor of a transfer function describing the control behavior,

the P gain, the reset time or the derivative time of a proportional, integral or derivative term of the heater control.

2. The additive manufacturing device according to claim 1, wherein the device for the adjustment of the heater control uses the heating power of the heating device used for heating up a building material layer as manipulated variable.

3. The additive manufacturing device according to one of the foregoing claims, wherein the at least one nominal parameter is at least one of the following quantities:
the work temperature ($T_A$), the maximum and/or minimum change of the temperature of the building material with time, the maximum duration for the heating of the building material up to the work temperature ($T_A$) from the start of the application of a new building material layer, the control accuracy.

4. The additive manufacturing device according to one of the foregoing claims, wherein the actual parameter detection unit (202) detects the time needed for heating a newly applied building material layer up to the work temperature

$T_A$ and the control change unit (203) automatically changes at least one control parameter value, if a predetermined maximum heating-up time is exceeded.

5. The additive manufacturing device according to one of the foregoing claims, wherein the control change unit uses a fuzzy control for changing the at least one control parameter value.

6. The additive manufacturing device according to one of the foregoing claims, wherein the control change unit uses a neural network and/or an evolutionary algorithm for changing the at least one control parameter value, wherein the neural network and/or the evolutionary algorithm access actual parameter values detected in the past by the actual parameter detection unit.

7. A method for adjusting a heater control in an additive manufacturing device in which a number of objects can be manufactured by a layer-wise application of building material layers, in particular powder layers, on top of each other, in that in a plurality of building material layers the positions that correspond to the cross-sections of the objects in the respective building material layer are solidified by means of radiation, wherein the heater control regulates the heating of an applied building material layer by means of a heating device up to a work temperature and regulates the value of at least one predetermined controlled variable based on at least one control parameter by changing the value of at least one predetermined manipulated variable, wherein the method comprises at least the following steps:

a step (S1) of providing at least one nominal parameter value, meaning the setpoint of a controlled variable and/or the setpoint of the change of the controlled variable with time and/or the setpoint of a heating parameter and/or the setpoint of its change with time,

a step (S2) of detecting at least one actual parameter value in the heater control or the additive manufacturing device, which actual parameter value corresponds to the at least one nominal parameter value, wherein an actual parameter value is the actual value of a controlled variable and/or the actual value of the change of the controlled variable with time and/or the actual value of a heater parameter and/or the actual value of its change with time, and

a step (S3) of automatically changing at least one control parameter in case a predefined difference between a nominal parameter value and its corresponding actual parameter is exceeded,

wherein the at least one control parameter that is changed is at least one of the following quantities:

the admissible maximum heating power ($P_{max}$), the size of the manipulation range of at least one of the manipulated variables, the controlled range (200) around the work temperature ($T_A$), within which the heater control actually performs a control, the maximum and/or minimum change of the heating power with time, at least one linear factor of a transfer function describing the control behavior,

the P gain, the reset time or the derivative time of a proportional, integral or derivative term of the heater control.

8. The method according to claim 7, in the course of which method exactly n layers are applied and solidified, wherein n is a natural number smaller or equal to the maximum number of layers applied during the manufacturing.

9. The method according to claim 7 or 8 being carried out before the application and solidification of the first layer for a manufacture of a number of objects, in that one or more building material layers are applied for test reasons in order to determine and change the control characteristics of the heater control.

10. A control unit (29) for equipping and/or retro-fitting an additive manufacturing device, wherein the control unit is configured to perform a method according to one of the claims 7 to 9,

wherein the control unit (29) includes a device for an adjustment of a heater control according to one of claims 1 to 6 and/or can be connected to such a device in terms of signaling,

wherein the additive manufacturing device is able to manufacture a number of objects by a layer-wise application of building material layers, in particular powder layers, on top of each other, in that in a plurality of building material layers the positions corresponding to the cross-sections of the objects in the respective building material layer are solidified by means of radiation and wherein the additive manufacturing device comprises:

a building support (11, 12) for supporting the object (2) to be formed;
an application device (14, 16) for applying a building material layer onto the surface of the building support (11, 12) or an already existing layer,
an irradiation device (20) that emits the electromagnetic radiation or particle radiation (22) and is able to irradiate all positions to be solidified in a layer such that the building material at these positions is partially or completely melted and/or joined by the heat energy supplied by the radiation, so that, after having cooled down, it exists in a solid state in which it is joined to itself at these positions,
a heating device (17) for heating an applied building material layer up to a work temperature and
a heater control that regulates the heating of an applied building material layer up to the work temperature by means of the heating device and is able to regulate the value of at least one predetermined controlled variable based on at least one control parameter by changing the value of at least one predetermined manipulated variable,

wherein the control unit (29) is able to control the application device (14, 16) and the irradiation device (20) such that a building material application step and a solidification step are consecutively repeated until all cross-sections of the at least one three-dimensional object to be manufactured have been solidified.

11. An additive manufacturing device for manufacturing a number of objects by a layer-wise application of building material layers on top of each other, wherein in each of the building material layers the positions corresponding to the cross-sections of the objects in the respective building material layer are solidified by means of radiation, and wherein the additive manufacturing device comprises:

a building support (11, 12) for supporting the object (2) to be formed,
a application device (14, 16) for applying a building material layer onto the surface of the building support (11, 12) or an already existing layer,
an irradiation device (20) that emits the electromagnetic radiation or particle radiation (22) and is able to irradiate all positions to be solidified in a layer such that the building material at these positions is partially or completely melted and/or joined by the heat energy supplied by the radiation, so that after the material has cooled down at these positions, it is in a solid state in which it is joined to itself,
a heating device (17) for heating an applied building material layer up to a work temperature,
a heater control that regulates the heating of an applied building material layer up to a work temperature by means of the heating device and is able to regulate the value of at least one predetermined controlled variable based on at least one control parameter by changing the value of at least one predetermined manipulated variable, and
a control unit (29) according to claim 10.

12. A computer program that is able to be loaded into a control unit of an additive manufacturing device and has program code means for carrying out all steps of a method according to one of claims 7 to 9 when the computer program is executed in the control unit of the additive manufacturing device.

**Revendications**

1. Dispositif de construction par couches additif avec un dispositif destiné à ajuster une régulation de chauffe, dans lequel, dans le dispositif de construction par couches additif, un certain nombre d'objets peut être fabriqué les uns sur les autres par application par couches de couches de matériau de construction, en particulier des couches pulvérulentes, en ce que dans une pluralité des couches de matériau de construction les emplacements correspondant aux sections transversales des objets dans cette couche de matériau de construction sont consolidés au moyen d'un rayonnement, dans lequel le régulation de chauffe règle à une température de fonctionnement (T$_A$) réchauffement d'une couche de matériau de construction appliquée au moyen d'un dispositif de chauffe (17) et est en mesure, sur la base d'au moins un paramètre de réglage, de régler la valeur d'au moins une grandeur de réglage prédéfinie par modification de la valeur d'au moins une grandeur d'ajustement prédéfinie,
dans lequel le dispositif présente :

une unité de fourniture de paramètre de consigne (201) qui est configurée de manière à fournir au moins une valeur de paramètre de consigne, donc la valeur de consigne d'une grandeur de réglage et/ou la modification de celle-ci dans le temps et/ou la valeur de consigne d'un paramètre de chauffe et/ou la modification de celle-ci dans le temps,
une unité de saisie de paramètre réel (202) qui est configurée de manière à pouvoir saisir, pour au moins l'une des valeurs de paramètre de consigne, la valeur de paramètre réel correspondante dans la régulation de chauffe ou le dispositif de construction par couches additif, dans lequel une valeur de paramètre réel est la valeur effective d'une grandeur de réglage et/ou la valeur effective de la modification de celle-ci dans le temps et/ou la valeur effective d'un paramètre de chauffe et/ou la valeur effective de la modification de celle-ci dans le temps, et

une unité de modification de réglage (203) qui modifie automatiquement au moins une valeur de paramètre de réglage lors du dépassement d'un écart prédéfini entre une valeur de paramètre de consigne et sa valeur de paramètre réel correspondante,

dans lequel le au moins un paramètre de réglage modifié est au moins l'une des grandeurs suivantes :

la puissance thermique admissible maximale ($P_{max}$), la taille de la zone d'ajustement d'au moins une des grandeurs de réglage, la zone de réglage (200) autour de la température de fonctionnement ($T_A$) à l'intérieur de laquelle la régulation de chauffe règle effectivement, la modification maximale et/ou minimale de la puissance thermique dans le temps, au moins un facteur linéaire d'une fonction de transfert décrivant le comportement de la régulation,

le renforcement P, la durée de rétention ou la durée de réglage d'une proportion proportionnelle, intégrale ou différentielle de la régulation de chauffe.

**2.** Dispositif de construction par couches additif selon la revendication 1, dans lequel le dispositif destiné à ajuster une régulation de chauffe en tant que grandeur d'ajustement utilise la puissance thermique du dispositif de chauffe utilisé pour chauffer une couche de matériau de construction.

**3.** Dispositif de construction par couches additif selon l'une des revendications précédentes, dans lequel le au moins un paramètre de consigne est au moins l'une des grandeurs suivantes :
la température de fonctionnement ($T_A$), la modification maximale et/ou minimale de la température du matériau de construction dans le temps, la durée maximale pour réchauffement à la température de fonctionnement ($T_A$) du matériau de construction à partir du début de l'application d'une nouvelle couche de matériau de construction, la précision de réglage.

**4.** Dispositif de construction par couches additif selon l'une des revendications précédentes, dans lequel l'unité de saisie de paramètre réel (202) détermine le temps nécessaire pour réchauffement à la température de fonctionnement ($T_A$) d'une couche de matériau de construction nouvellement appliquée et l'unité de modification de réglage (203) modifie automatiquement au moins une valeur de paramètre de réglage lors du dépassement d'un temps d'échauffement maximal prédéfini.

**5.** Dispositif de construction par couches additif selon l'une des revendications précédentes, dans lequel l'unité de modification de réglage se sert d'une régulation à logique floue pour modifier la au moins une valeur de paramètre de réglage.

**6.** Dispositif de construction par couches additif selon l'une des revendications précédentes, dans lequel l'unité de modification de réglage se sert, pour modifier la au moins une valeur de paramètre de réglage, d'un réseau neuronal et/ou d'un algorithme évolutionniste, lesquels recourent aux valeurs de paramètre réel saisies dans le passé par l'unité de saisie de paramètre réel.

**7.** Procédé destiné à ajuster une régulation de chauffe dans un dispositif de construction par couches additif dans lequel un certain nombre d'objets peut être fabriqué les uns sur les autres par application par couches de couches de matériau de construction, en particulier des couches pulvérulentes, en ce que dans une pluralité des couches de matériau de construction les emplacements correspondant aux sections transversales des objets dans cette couche de matériau de construction sont consolidés au moyen d'un rayonnement, dans lequel la régulation de chauffe règle à une température de fonctionnement réchauffement d'une couche de matériau de construction appliquée au moyen d'un dispositif de chauffe et, sur la base d'au moins un paramètre de réglage, règle la valeur d'au moins une grandeur de réglage prédéfinie par modification de la valeur d'au moins une grandeur d'ajustement prédéfinie, dans lequel le procédé comprend au moins :

une étape (S1) de fourniture d'au moins une valeur de paramètre de consigne, donc de la valeur de consigne d'une grandeur de réglage et/ou la valeur de consigne de la modification de celle-ci dans le temps et/ou la valeur de consigne d'un paramètre de chauffe et/ou la valeur de consigne de la modification de celle-ci dans le temps,

une étape (S2) de saisie d'au moins une valeur de paramètre réel correspondant à la au moins une valeur de paramètre de consigne dans la régulation de chauffe ou le dispositif de construction par couches additif, dans lequel une valeur de paramètre réel est la valeur effective d'une grandeur de réglage et/ou la valeur effective de la modification de celle-ci dans le temps et/ou la valeur effective d'un paramètre de chauffe et/ou la valeur effective de la modification de celle-ci dans le temps, et

une étape (S3) de modification automatique d'au moins un paramètre de réglage lors du dépassement d'un écart prédéfini entre une valeur de paramètre de consigne et sa valeur de paramètre réel correspondante, dans lequel le au moins un paramètre de réglage modifié est au moins l'une des grandeurs suivantes :

la puissance thermique admissible maximale ($P_{max}$), la taille de la zone d'ajustement d'au moins une des grandeurs de réglage, la zone de réglage (200) autour de la température de fonctionnement ($T_A$) à l'intérieur de laquelle la régulation de chauffe règle effectivement, la modification maximale et/ou minimale de la puissance thermique dans le temps, au moins un facteur linéaire d'une fonction de transfert décrivant le comportement de la régulation,

le renforcement P, la durée de rétention ou la durée de réglage d'une proportion proportionnelle, intégrale ou différentielle de la régulation de chauffe.

8. Procédé selon la revendication 7, par lequel l'application et la solidification d'une couche est exécutée pour exactement n couches, dans lequel n est un nombre naturel qui est inférieur ou égal au nombre maximal des couches appliquées pendant la fabrication.

9. Procédé selon la revendication 7 ou 8, exécuté avant l'application et la solidification de la première couche pour fabriquer le nombre d'objets, en ce qu'à des fins de test une ou plusieurs couches de matériau de construction sont appliquées pour déterminer et modifier le comportement de réglage de la régulation de chauffe.

10. Unité de commande (29) destinée à équiper d'abord et/ou ultérieurement un dispositif de construction par couches additif, dans lequel l'unité de commande est configurée pour exécuter un procédé selon l'une des revendications 7 à 9,

dans lequel l'unité de commande (29) contient un dispositif destiné à ajuster une régulation de chauffe selon l'une des revendications 1 à 6, et/ou peut être relié avec celui-ci par technique de signal,

dans lequel le dispositif de construction par couches additif est adapté pour fabriquer un certain nombre d'objets les uns sur les autres par application par couches de couches de matériau de construction, en particulier des couches pulvérulentes, en ce que dans une pluralité des couches de matériau de construction les emplacements correspondant aux sections transversales des objets dans cette couche de matériau de construction sont consolidés au moyen d'un rayonnement, et dans lequel le dispositif de construction par couches additif présente :

un support de construction (11, 12) pour porter l'objet (2) à former ;

un dispositif d'application (14, 16) pour appliquer une couche de matériau de construction sur la surface du support de construction (11, 12) ou une couche déjà présente,

un dispositif de rayonnement (20) qui émet un rayonnement électromagnétique ou un rayonnement de particules (22) et est en mesure d'irradier tous les emplacements à consolider dans une couche de telle sorte que le matériau de construction soit fondu et/ou relié partiellement ou entièrement en ces emplacements par l'énergie thermique introduite par le rayonnement, de sorte qu'après un refroidissement en ces emplacements reliés en soi se présente un corps solide,

un dispositif de chauffe (17) pour chauffer à une température de fonctionnement une couche de matériau de construction appliquée et

une régulation de chauffe qui règle à la température de fonctionnement réchauffement d'une couche de matériau de construction appliquée au moyen du dispositif de chauffe et est en mesure, sur la base d'au moins un paramètre de réglage, de régler la valeur d'au moins une grandeur de réglage prédéfinie par modification de la valeur d'au moins une grandeur d'ajustement prédéfinie,

dans lequel l'unité de commande (29) est adaptée pour commander le dispositif d'application (14, 16) et le dispositif de rayonnement (20) de telle sorte qu'une étape d'application de matériau de construction et une étape de consolidation soient renouvelées l'une après l'autre suffisamment souvent pour que toutes les sections transversales du au moins un objet tridimensionnel à fabriquer soient consolidées.

11. Dispositif de construction par couches additif destiné à fabriquer un certain nombre d'objets par application par couches de couches de matériau de construction les unes sur les autres, en ce que dans chacune des couches de matériau de construction les emplacements correspondant aux sections transversales des objets dans cette couche de matériau de construction sont consolidés au moyen d'un rayonnement, et dans lequel le dispositif de construction par couches additif présente :

un support de construction (11, 12) pour porter l'objet (2) à former ;
un dispositif d'application (14, 16) pour appliquer une couche de matériau de construction sur la surface du support de construction (11, 12) ou une couche déjà présente,
un dispositif de rayonnement (20) qui émet un rayonnement électromagnétique ou un rayonnement de particules (22) et est en mesure d'irradier tous les emplacements à consolider dans une couche de telle sorte que le matériau de construction soit fondu et/ou relié partiellement ou entièrement en ces emplacements par l'énergie thermique introduite par le rayonnement, de sorte qu'après un refroidissement en ces emplacements reliés en soi se présente un corps solide,
un dispositif de chauffe (17) pour chauffer à une température de fonctionnement une couche de matériau de construction appliquée,
une régulation de chauffe qui règle à une température de fonctionnement réchauffement d'une couche de matériau de construction appliquée au moyen du dispositif de chauffe et est en mesure, sur la base d'au moins un paramètre de réglage, de régler la valeur d'au moins une grandeur de réglage prédéfinie par modification de la valeur d'au moins une grandeur d'ajustement prédéfinie, et
une unité de commande (29) selon la revendication 10.

12. Programme informatique qui peut être chargé dans une unité de commande d'un dispositif de construction par couches additif, avec des moyens de code de programme pour exécuter toutes les étapes d'un procédé selon l'une des revendications 7 à 9 lorsque le programme informatique est exécuté sur l'unité de commande du dispositif de construction par couches additif.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004029103 A1
- EP 0764079 B1
- US 20110165340 A1